# EUROPEAN PATENT APPLICATION

(11) **EP 2 434 512 A1**
(43) Date of publication of application: **28.03.2012**
(21) Application number: 09784124.1
(22) Date of filing: 20.05.2009
(51) Int. Cl.: H01H 31/00, H02H 3/06, H02H 7/26

(54) **METHOD FOR ACTIVATING THE COUNTER OF A SECTIONALIZER**

(71) Applicant: Inael Electrical Systems, S.A., 45007 Toledo (ES)
(72) Inventor: CERDÁ DAVO, Silvestre, E-45007 Toledo (ES)
(74) Representative: Capitán García, Maria Nuria
(86) International application number: PCT/ES2009/070171
(87) International publication number: WO 2010/133717

(57) **Abstract**

The invention relates to a method for activating the counter of a sectionalizer that allows the simultaneous opening of the phases of the sectionalizer since it includes for the radio transmission of the opening. According to the invention, the counter of the sectionalizer is activated upon detection of an increase in current over a given period greater than a pre-determined increase, allowing the sectionalizers to be standardized into a single model, as the counter is not activated using a threshold value, and allowing short-circuit currents to be differentiated from increases in current that are simply due to an increase in consumption.

## Description

### OBJECT OF THE INVENTION

The object of the present invention, as its title indicates, relates to a method for activating the counter of a sectionalizer which, by means of a radio signal, performs the multi-phase simultaneous opening of a sectionalizer assembly.

The present invention is characterised by the specific condition under which the synchronised opening is performed for a multi-phase sectionalizer, due to which it is possible to establish a single sectionalizer model for all grids, wherein this condition is also configurable and adaptable to the grid requirements.

Therefore, the present invention lies within the scope of multiphase sectionalizers with synchronised opening, and more specifically, the methods used for synchronised opening.

### BACKGROUND OF THE INVENTION

Sectionalizers are automatic sectioning devices installed outdoors on posts in overhead medium-voltage lines. They must be used in combination with an automatic switch placed upstream with the capacity for repeated reclosings.

The operation principle of sectionalizers is based on discharge of an internal capacitor on a small relay which, when actuated, turns a retaining ratchet and releases the conducting tube, making it fall, in a manner similar to that of an expulsion fuse holder.

The sectionalizer is reactivated by a manual resetting of the device, without having to replace any of its parts.

When the sectionalizer memory counts the number (1 or 2 or 3) of zeroes that is has been programmed with, it issues an order to release a retaining ratchet and causes the sectionalizer to open.

In order to achieve the simultaneous opening of all sectionalizers that make up a multiphase sectionalizer, mechanical connection means are needed between the various sectionalizers to allow the simultaneous multiphase release and opening of the line current.

However, the mechanical means used for the simultaneous opening of the different sectionalizers are exposed to potential malfunctions, and do not achieve a perfect synchronisation in the sectionalizer opening, with the resulting drawbacks in their operation. For this reason, synchronised opening sectionalizers have been developed that are connected to each other via radio.

On another hand these devices, in order to allow discriminating between a transient fault and a permanent one, have been provided with an opening method consisting of an incremental programmable logic implemented in a printed circuit board, so that if it detects a current that has exceeded a specified threshold value, and if the sectionalizer sees the current fall to zero, interpreting that the header switch has been opened its status becomes "warning , it does not open and its counter is reset to zero. If the sectionalizer, after the header switch closes, does not see a current greater than a threshold value it will clear the counter; if instead it observes that the fault current is still present, it waits to see what the header switch does. If the latter opens, the sectionalizer detects a new current fault, increasing its counter to two and opening the circuit, so that its radio circuit is activated, notifying the rest of the event to the other two phases, the three phases opening simultaneously during the voltage absence period.

However, this sectionalizer actuation method based on activating the counters when the current exceeds a threshold value is not free of difficulties.

On one hand, the sectionalizer counters can be activated by a simple load increase, which would not be distinguishable from a fault, which occurs easily in grids with isolated neutral phase.

On another hand, as the sectionalizer counter activation is based on threshold values, different models are required rated to different threshold currents, so that there are models calibrated for currents of 12, 25, 40, 63, 100, 140 Amps. Thus, each sectionalizer model can only be used in a specific and particular area, and a sectionalizer of one caliber cannot be replaced by another. Therefore, this practical execution drawback is a continuous source of problems in the everyday life of distribution companies, which are forced to keep a series of spares for the different sectionalizer models that may be present, according to their rated threshold currents.

Therefore, the object of the present invention is to overcome the aforementioned drawbacks by developing multiphase sectionalizers with synchronised opening via radio, provided with a method for activating the incremental logic counters to actuate the sectionalizers that prevents actuation due to simple current increases and that also allows standardising all sectionalizers into a single model, so that companies in charge of distribution grids are not required to keep spare for all sectionalizer models according to their rated threshold currents.

### DESCRIPTION OF THE INVENTION

The invention for an actuation method for multiphase synchronizers via radio consists in activating the counters of the sectionalizers that does not depend on exceeding a threshold value but instead on a current increase greater than a certain predefined increase, that is, according to an incremental current increase. In other words, depending on the current gradient or, expressed in terms of how much the current value has increased over a certain period.

The activation of sectionalizer counters depending on whether a current increase has occurred greater than a predefined increase implies a series of immediate advantages. On one hand, it makes it possible to discriminate between a simple current increase due to a load increase, and a fault, activating only in case of a fault as there is an incremental value grater than a predefined value.

There is an additional important advantage in that it makes it possible to standardise sectionalizers into a single model, as their specific characteristic would only be the predefined incremental value, so that it if is exceeded the counter will be activated; thus, the sectionalizer will be valid for any point of the grid.

In addition, and due to the possibility of programming the predefined incremental value with the programmable logic, it is possible to adapt this value to the specific requirements or characteristics of each grid, so that each company generally has its own incremental value.

Thus, some companies may choose to set an increase of 30 Amps in 0.3 seconds as the limit incremental value, while others may set an increase of 100 Amps in 0.5 seconds.

### DESCRIPTION OF THE DRAWINGS

To complete the description that follows and in order to aid a better comprehension of its characteristics, the present specification is accompanied by a set of drawings where, for illustration purposes and in a non-limiting manner, figures are provided that represent the most significant details of the invention.
Figure 1 shows a simplified representation of a grid just before a short-circuit.
Figure 2 shows the representation of the aforementioned grid when at the time of a short-circuit in the specified point.
Figure 3 shows the current through the branch in the fault of the previous figures.

### PREFERRED EMBODIMENT OF THE INVENTION

In view of the aforementioned figures, a preferred embodiment of the invention is described below as well as an explanation of the drawings.

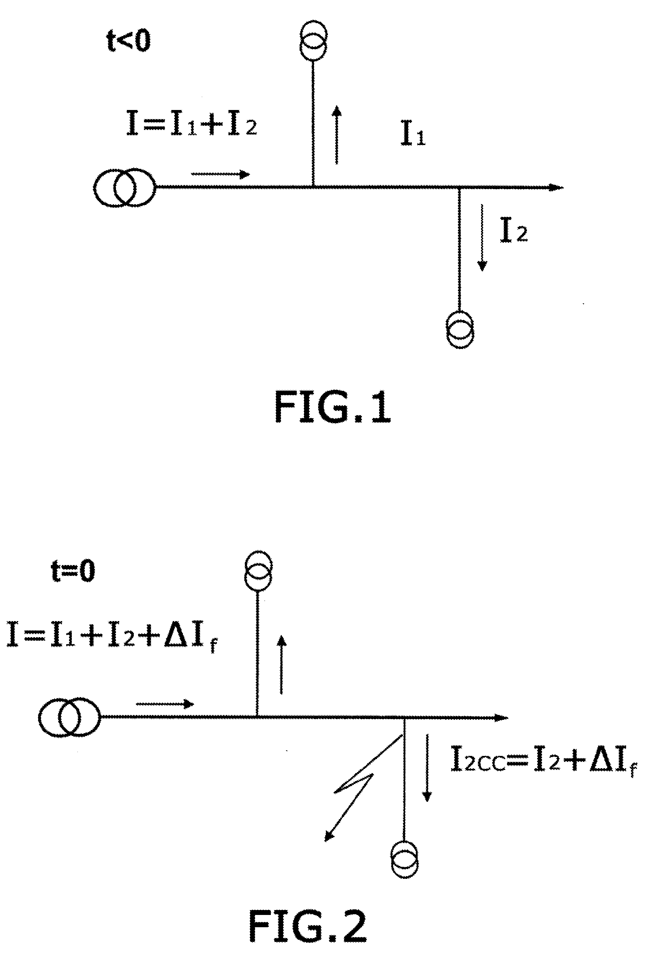

Figure 1 shows a simplified grid assumed to have an isolated neutral with two branches through which passes I₁ and I₂ respectively. At t=0 a fault occurs that increases the current in the faulty branch from I₂ Amps to I₂ + Δ_{f} Amps, as shown in figure 2.

If said Δ_{f} is greater than a predefined or specified increment, the sectionalizer status will change to warning and it will listen to the reaction of the header circuit breaker. If the latter opens, the sectionalizer will detect an absence of current and it will know that a fault occurred, so that the counter will be activated, increasing the counter number to one.

Once the header circuit breaker closes it still sees the increased current, and it will feel the header circuit breaker opening, deciding that the fault takes place in its branch and activating its counter again, simultaneously opening the other phases when supply is cut off.

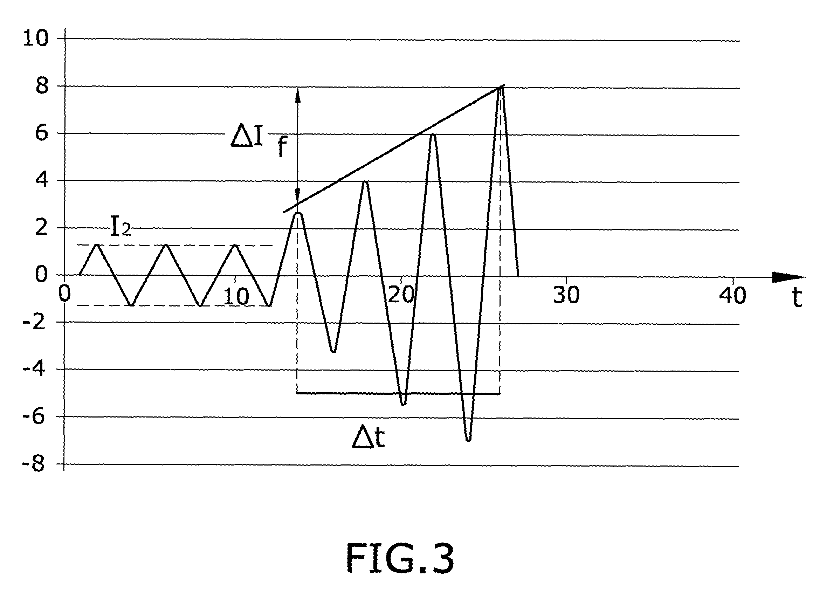

Figure 3 shows the graphical representation of how the current through the branch passed from having a value of I₂ Amps to I₂ + Δ_{f} Amps due to a short circuit.

If the activation of the sectionalizer counters took place due to a threshold current value, in case of a current increase through the branch, this activation may have taken place when it is simply due to an increased consumption and not a fault.

Therefore, thanks to the sectionalizer activation method of the invention, in which the counter activation takes place in case of a current increase greater than a specified incremental value, that is, if there is a gradient higher than an established value, it is possible to prevent the counter from activating simply when a threshold value is reached as is the case hitherto.

In addition, as the method is based on exceeding a predefined incremental value, the sectionalizer model is unique and there will not be as many sectionalizer models as threshold values assigned to the sectionalizers. The incremental value that must be exceeded to activate the counter is adjusted for each distributor, grid or zone.

On another hand, and as the sectionalizer has a programmable logic, it is possible to program the incremental control value that limits the activation of the sectionalizer counter, according to the needs of each zone, client, etc.

The number of counts made by the sectionalizer can be two, three or more, conforming to any protection approach.

Therefore, the incremental logic implemented that is activated by a current increase in a certain time allows a single sectionalizer model to be valid for any point of the grid, as the activation is not based on a threshold value and, in addition, as already stated, it allows discriminating between short circuits and simple load increases.

This description is considered sufficient to allow any person skilled in the art to understand the scope of the invention and the advantages derived thereof.

The materials, shape, size and arrangement of the elements may vary provided the essence of the invention is not affected.

The terms used in this specification must be understood in a wide and non-limiting sense.

## Claims

1. Method for activating the counter of a sectionalizer provided with means for simultaneous activation of the other phases via radio, **characterised in that** the counter activation method is based on that an electronic circuit of the sectionalizer stores, compares and analyzes current samples at a very high rate, and when it detects a current increase in a given period greater than a predefined increase, the sectionalizer status will change to warning, proceeding to listen to the header circuit breaker or switch; if it is open the sectionalizer will detect the absence of current and know that a fault occurred, increasing the counter number to one.

2. Method for activating the counter of a sectionalizer according to claim 1, **characterised in that** after a first count if the header circuit breaker closes, the incremental current disappears, and the sectionalizer sets the counter to zero, but if when the circuit breaker closes the current is still increased and the header opening is sensed, it will decide that the fault is in its branch and will increase the counter number to two.

3. Method for activating the counter of a sectionalizer according to claim 2, **characterised in that** the number of counts made by the sectionalizer can be two, three or more, in accordance with any protection approach.

4. Method for activating the counter of a sectionalizer according to claim 3 **characterised in that** when the sectionalizer reaches the programmed number of counts it will simultaneously open the other two phases when the supply is cut off.
